# EUROPÄISCHE PATENTSCHRIFT

(11) **EP 2 927 049 B1**
(45) Veröffentlichungstag und Bekanntmachung des Hinweises auf die Patenterteilung: **30.08.2017**
(21) Anmeldenummer: 14163234.9
(22) Anmeldetag: 02.04.2014
(51) Int. Cl.: B60P 3/40, B62D 61/10, B62D 21/14

(54) **Modulare Auszugsröhre**
Modular telescopic tube
Tubes d'extension modulaires

(43) Veröffentlichungstag der Anmeldung: 07.10.2015
(73) Patentinhaber: J.G.B.D. Consult SPRL, 3560 Lummen (BE)
(72) Erfinder: Habernegg, Hans-Jörg, 87600 Kaufbeuren (DE)
(74) Vertreter: Meinke, Jochen

(56) Entgegenhaltungen:
- DE-A1- 1 555 578
- DE-A1-102005 035 379
- DE-U1-202012 009 294
- DE-U1-202012 010 545
- NL-A- 9 302 012
- NL-A- 9 400 578

## Beschreibung

Um die Länge der Ladefläche von Anhängern und Sattelanhängern an das Ladegut anpassen zu können, sind sogenannte ausziehbare Fahrzeuge bekannt. Bei diesen Fahrzeugen ist der Zentralträger als Röhre oder als oben offene Mulde ausgebildet, in die eine zweite Röhre oder ein zweiter Träger eingeschoben und daran arretiert werden kann. Es wird also in eine Außenröhre eine Innenröhre eingeschoben. Die bei der Beladung des Fahrzeugs auftretenden Biegemomente werden von dem Obergurt der Innenröhre an den Obergurt der Außenröhre übertragen. Dazu ist der Obergurt der Außenröhre bei Bedarf verstärkt ausgeführt. Die im Fahrbetrieb auftretenden Längskräfte, insbesondere die Zugkraft, die Beschleunigungs- und die Bremskräfte werden durch eine Verriegelung aufgenommen, die die Innen- und Außenröhre formschlüssig miteinander verbindet. Dazu benutzen sowohl die Innen- als auch die Außenröhre entsprechende Arretierungsvorrichtungen.

Um die Energieversorgung, insbesondere auch die notwendigen elektrischen Einrichtungen, vom Zugfahrzeug bzw. einem vorlaufenden Fahrwerk zum Anhänger bzw. zu einem nachlaufenden Fahrwerk sicher zu stellen, sind an oder in der Innenröhre Versorgungsleitungen angebracht, die in Fahrtrichtung vorne mit einem vorne laufenden Fahrwerk oder Schwanenhals verbunden sind. In Fahrtrichtung hinten sind die Leitungen in der Innenröhre fest mit dem hinten laufenden Fahrwerk verbunden.

Aus der DE 20 2012 010 545 U1 ist eine Tragstruktur, nämlich ein Schwerlasttransportfahrzeug zum Transport eines länglichen Objekts, insbesondere eines Rotorblatts einer Windkraftanlage mit einem mehrachsigen Nachläufer bekannt, bei dem mindestens zwei, vorteilhaft drei benachbarte teleskopierbare Elemente vorhanden sind, die nicht entfernt oder nachträglich angebracht werden können. Der Träger ist zwingend teleskopierbar. Aus der NL 9302012 A wiederum ist ein Containertransportfahrzeug ohne Zentralträger bekannt.

Die DE 20 2012 009 294 U1 zeigt ein Lastentransportfahrzeug für Absetzbehälter mit mindestens einem Hauptträger und ineinander schiebbaren Trägern, die ebenfalls nicht nachrüstbar sind. Das gilt auch für das aus der NL 9400578 A bekannte Lastkraftfahrzeug. Sie weisen seit langem bekannte Einzellösungen, wie Ringanker, Auszugsröhren und Führungen auf.

Nachteilig bei den bekannten Gestaltungen ist, dass schon beim Kauf eines Fahrzeuges entschieden werden muss, ob überhaupt eine ausziehbare Ladefläche benötigt wird. Bejahendenfalls muss das hinten laufende Fahrwerk konstruktiv entsprechend ausgeführt sein und beispielsweise einen verstärkten Obergurt, eine Verriegelung zwischen Innen- und Außenröhre und Leitungsanschlüsse im Fahrwerk aufweisen. Dies ist mit nicht unerheblichen Kosten und auch dementsprechenden Material und Gewicht verbunden.

Aufgabe der Erfindung ist es daher, die im Stand der Technik vorhandenen Nachteile zu vermeiden, insbesondere eine Lösung dafür bereitzustellen, dass das hinten laufende Fahrwerk keine Vorbereitung für eine spätere Ausziehbarkeit aufweisen muss.

Gemäß der Erfindung wird diese Aufgabe dadurch gelöst, dass bei einem Fahrzeug mit einem aus Röhre oder Mulde ausgebildeten Zentralträger dieser nachträglich mit einem darin einschiebbaren und daraus ausziehbaren Innenträger ausrüstbar ist.

Hiermit wird erreicht, dass die Funktion "Veränderung der Länge der Ladefläche" zu einem beliebigen, auch späteren Zeitpunkt einem bereits voll funktionsfähigen Fahrzeug, Anhänger oder Sattelanhänger, hinzugefügt werden kann. An dem hinten laufenden Fahrwerk mit entsprechend als Mulde oder Röhre ausgebildeten Zentralträger sind keinerlei Vorbereitungen für die spätere Ausziehbarkeit erforderlich. Möglicherweise unnötige Kosten können damit eingespart werden. Außerdem können hinten laufende Fahrzeuge beliebig ausgetauscht werden.

Insbesondere ist vorgesehen, dass der Innenträger mit einem an der Oberseite offenen Ringanker oder ringsum geschlossenen Ringanker mit Obergurt zur Einleitung vertikaler und horizontaler Biegemomente versehen ist und am Fahrzeug Befestigungselemente für den Ringanker vorgesehen sind.

Weiter ist vorgesehen, dass bei geschlossenem Ringanker der Obergurt des Ringankers zur Aufnahme von Biegekräften des Innenträgers ausgebildet ist.

Der vorgeschlagene Ringanker ermöglicht es die im Betrieb auftretenden vertikalen Biegemomente von dem Innenträger an das Fahrwerk, insbesondere am das hinten laufende Fahrwerk zu übertragen, ohne dass der Obergurt der Außenröhre verstärkt werden muss. Es ist sogar möglich, einen als Mulde ausgebildeten, also oben offenen Zentralträger einzusetzen. Je nach Ausführung des Ringankers nehmen entweder der Obergurt des Ringankers oder eine in den vertikalen Stegen angebrachte Verriegelung die Biegekräfte des Innenträgers auf und leiten diese über seine vertikalen Stege direkt in Kupplungslaschen des Zentralträgers im Fahrzeug, insbesondere des hinten laufenden Fahrwerks, ein.

Hierzu weist der Ringanker an seiner Unterseite als Befestigungselemente Kupplungslaschen auf, die mit Kupplungslaschen am Fahrwerk über Bolzen fixierbar sind.

Erfindungsgemäß ist der Ringanker mit einer Verriegelungsvorrichtung zur formschlüssigen Verbindung mit dem Innenträger versehen. Dies ermöglicht es, den Ringanker formschlüssig mit der Innenröhre zu verbinden und so die auftretenden Zug-, Brems- und Beschleunigungskräfte von dem Innenträger auf den Zentralträger und das hinten laufende Fahrwerk zu übertragen. Vorgesehen ist, dass bei geschlossenem Ringanker der Obergurt des Ringankers zur Aufnahme von Biegekräften des Innenträgers ausgebildet ist.

Bei einem an der Oberseite offenen Ringanker sind zur Einleitung der Biegekräfte seitlich an der Innenröhre und gegenüberliegend am Ringanker formschlüssige Elemente angebracht, die eine Ableitung der Biegekräfte vom Steg der Innenröhre an den vertikalen Seiten des Ringankers ermöglichen. Im Falle des offenen Ringankers ist somit kein Obergurt zur Ableitung der Biegekräfte erforderlich.

Zusätzlich sieht die Erfindung auch vor, dass der Ringanker an seiner Außenseite Kupplungselemente zur Kupplung von Versorgungsleitungen mit dem Fahrwerk, also insbesondere dem nachlaufenden Fahrwerk aufweist. Dadurch können Versorgungsleitungen vom vorne laufenden Fahrwerk oder einem Schwanenhals, aber auch die im Ringanker befindlichen Versorgungsleitungen mit dem gekoppelten insbesondere hinten laufenden Fahrwerk gekoppelt werden.

Weiter ist vorgesehen, dass der Innenträger eine flexible Leitungsführung zur Überführung der Versorgungsleitungen von einem vorlaufenden Fahrwerk oder einem Schwanenhals in den Ringanker aufweist. Damit wird eine flexible Leitungsführung ermöglicht, die Versorgungsleitungen vom vorne laufenden Schwanenhals oder Fahrwerk in den auf der Innenröhre verschiebbaren Ringanker überführt.

Schließlich ist vorgesehen, dass der Ringanker auf dem Innenträger verschieb- und in der gewünschten Position arretierbar ist. Damit kann die Länge der Ladefläche variiert und an das jeweilige Ladegut oder sonstige Erfordernisse optimal angepasst werden.

Die Erfindung ist nachstehend anhand der Zeichnung erläutert. Diese zeigt in:
- Fig. 1: eine perspektivische Frontansicht eines erfindungsgemäßen Fahrzeugs mit als Mulde ausgebildetem Zentralträger und teilweise ausgezogenem Innenträger mit geschlossenem Ringanker mit Obergurt,
- Fig. 2: eine Detailansicht gemäß Figur 1,
- Fig. 3: eine perspektivische Frontansicht mit einem oben offenen Ringanker und
- Fig. 4: eine Detailansicht gemäß Figur 3.

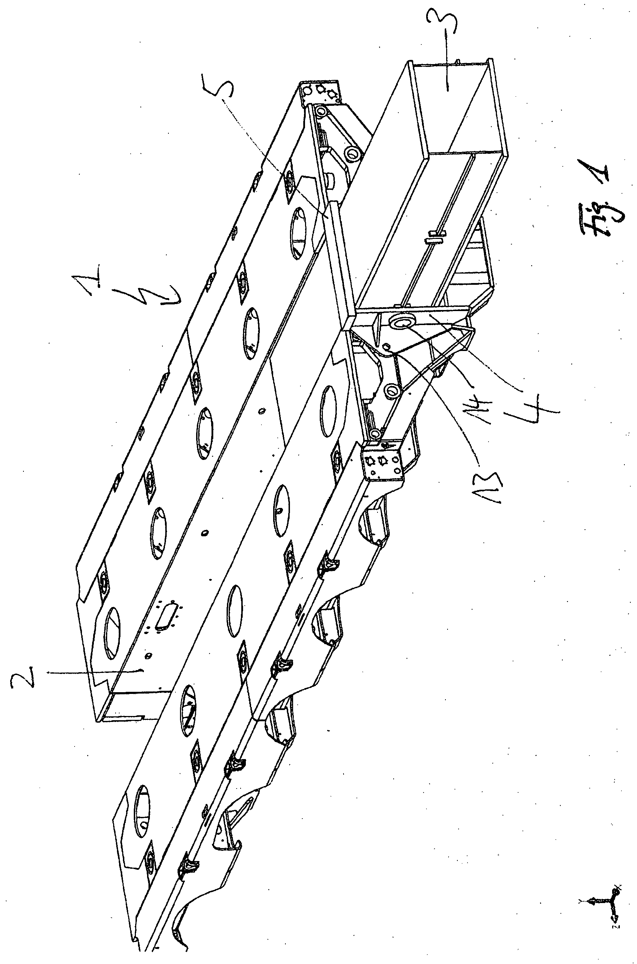

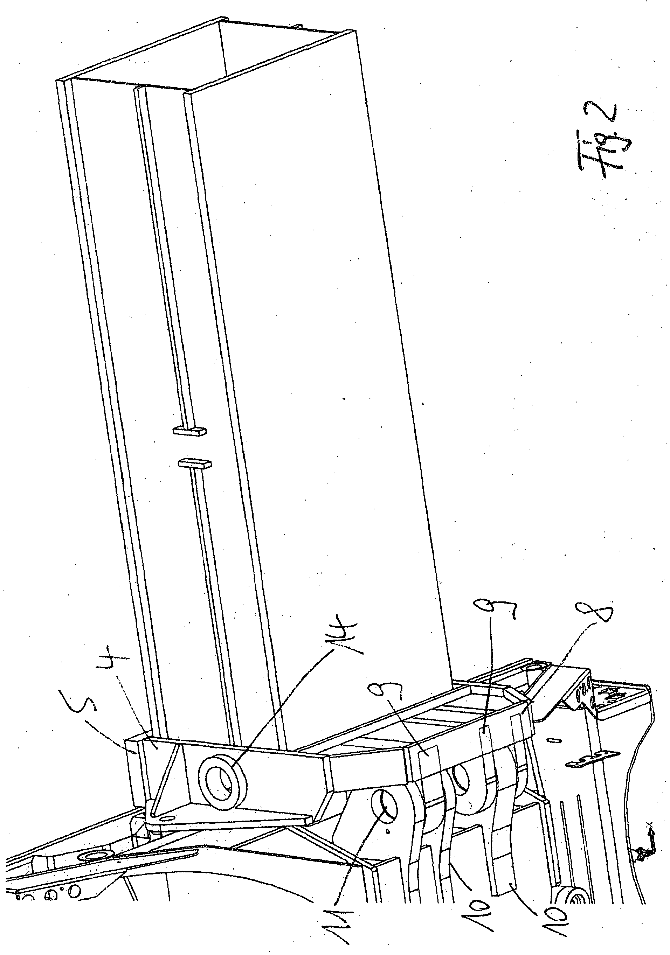

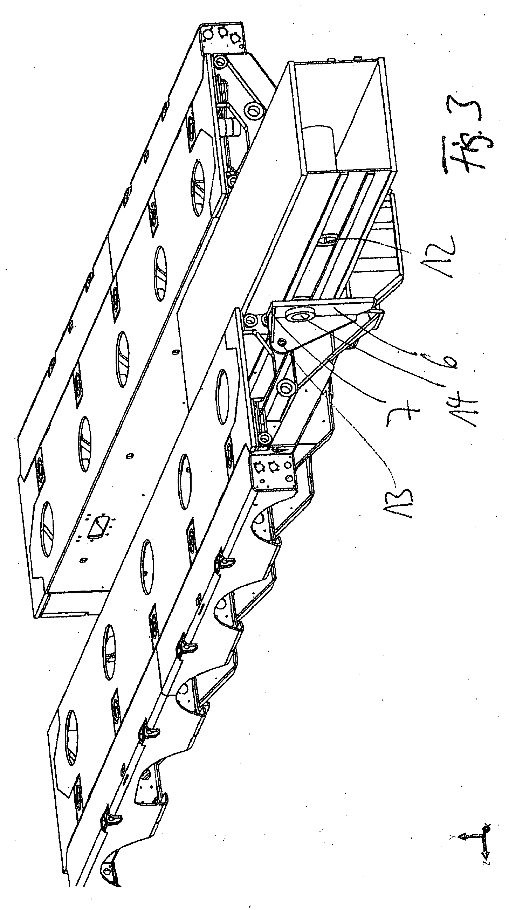

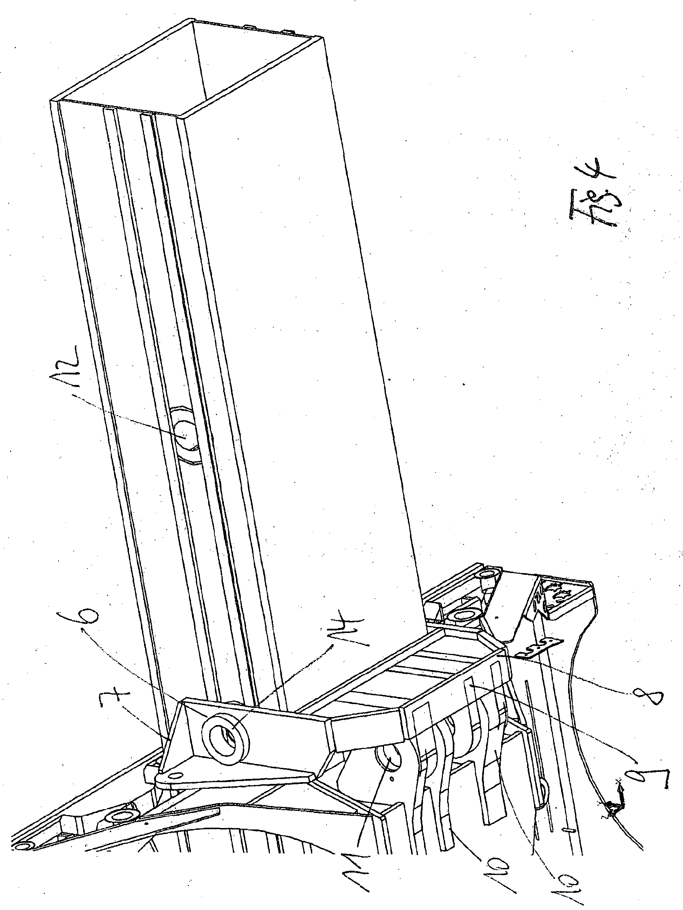

Ein allgemein mit 1 bezeichnete Chassis eines in seiner Gesamtheit nicht näher dargestellten Fahrzeuges, insbesondere Anhängers oder Sattelanhängers, weist in der dargestellten Ausführungsform einen als Mulde 2 ausgebildeten Zentralträger 2 und einen darin einschiebbaren und daraus ausziehbaren Innenträger 3 auf. Der Innenträger 3 ist entweder wie in den Figuren 1 und 2 dargestellt, mit einem ringsum geschlossenen Ringanker 4 mit Obergurt 5 oder mit einem an der Oberseite 7 offenen Ringanker 6, wie in den Figuren 3 und 4 dargestellt, versehen. In jedem Fall weist der Ringanker 4, 6 an seiner Unterseite 8 Kupplungslaschen 9 als Befestigungselemente auf, die mit hierzu korrespondierenden Kupplungslaschen 10 am Fahrzeug 1 über nicht näher dargestellte Bolzen, die durch die Löcher 11 der Kupplungslaschen 10 einsteckbar sind, fixierbar sind. Weiter ist der Ringanker 4, 6 mit wenigstens einer Verriegelungsvorrichtung 12 zur formschlüssigen Verbindung mit dem Innenträger 3 versehen, der hierzu ein Gegenverriegelungsstück 14 aufweist.

Bei geschlossenem Ringanker 4 ist der Obergurt 5 des Ringankers 4 zur Aufnahme von Biegekräften des Innenträgers 3 ausgebildet.

An der Oberseite 7 des offenen Ringankers 6 sind zur Einleitung von Biegekräften seitlich an dem Innenträger 3 und an den gegenüberliegenden Seiten des Ringankers 6 Verriegelungselemente 12 angeordnet.

Weiter weist der Ringanker 4, 6 an seiner Außenseite Kupplungselemente 13 zur Kupplung von Versorgungsleitungen mit dem Fahrzeug 1 auf.

Überdies besitzt der Innenträger 3 eine flexible Leitungsführung zur Überführung von Versorgungsleitungen von einem vorlaufenden Fahrwerk oder einen Schwanenhals in den Ringanker 4, 6.

Der Ringanker 4, 6 ist auf dem Innenträger 3 verschieb- und in der gewünschten Position arretierbar.

Natürlich ist die Erfindung nicht auf die dargestellten Ausführungsbeispiele beschränkt. Weitere Ausgestaltungen sind möglich, ohne den Grundgedanken zu verlassen.

## Patentansprüche

1. Vorrichtung zur Veränderung der Länge der Ladefläche von Anhängern und Sattelanhängern, wobei diese mit einem als Röhre oder Mulde (2) ausgebildeten Zentralträger (2) und einem darin einschiebbaren und daraus ausziehbaren Innenträger (3) ausrüstbar sind, und wobei der Innenträger (3) mit einem an der Oberseite (7) offenen Ringanker (6) oder ringsum geschlossenen Ringanker (4) mit Obergurt (5) versehen ist und am Anhänger oder Sattelanhänger (1) Befestigungselemente für den Ringanker (4) vorgesehen sind,
**dadurch gekennzeichnet,**
**dass** bei geschlossenem Ringanker (4) der Obergurt (5) des Ringankers (4) zur Aufnahme von Biegekräften des Innenträgers (3) ausgebildet ist und dass bei an der Oberseite (7) offenem Ringanker (6) zur Einleitung von Biegekräften seitlich an dem Innenträger (3) und an den gegenüberliegenden Seiten des Ringankers (6) Verriegelungselemente (12,14) angeordnet sind.

2. Vorrichtung nach Anspruch 1,
**dadurch gekennzeichnet,**
**dass** der Ringanker (4, 6) an seiner Unterseite (8) als Befestigungselemente Kupplungslaschen (9) aufweist, die mit Kupplungslaschen (10) am Fahrzeug (1) über Bolzen fixierbar sind.

3. Vorrichtung nach Anspruch 1 oder 2,
**dadurch gekennzeichnet,**
**dass** der Ringanker (4, 6) mit wenigstens einer Verriegelungsvorrichtung (14) zur formschlüssigen Verbindung mit dem Innenträger (3) versehen ist.

4. Vorrichtung nach einem oder mehreren der Ansprüche 1 bis 3,
**dadurch gekennzeichnet,**
**dass** der Ringanker (4, 6) an seiner Außenseite Kupplungselemente (13) zur Kupplung von Versorgungsleitungen mit dem Fahrzeug (1) aufweist.

5. Vorrichtung nach einem oder mehreren der Ansprüche 1 bis 4,
**dadurch gekennzeichnet,**
**dass** der Innenträger (3) eine flexible Leitungsführung zur Überführung der Versorgungsleitungen von einem vorlaufenden Fahrwerk oder einem Schwanenhals in den Ringanker (4, 6) aufweist.

6. Vorrichtung nach einem oder mehreren der Ansprüche 1 bis 5,
**dadurch gekennzeichnet**,
das der Ringanker (4, 6) auf dem Innenträger (3) verschieb- und in der gewünschten Position arretierbar ist.

## Claims

1. Device for altering the length of the loading area of trailers and semitrailers, wherein these can be equipped with a central support (2) formed as a tube or recess (2) and an inner support (3) that can be inserted into and removed from the latter, and wherein the inner support (3) is provided with an open ring beam (6) on the upper side (7) or a ring beam (4) with an upper flange (5) closed all the way round, and fastening means for the ring beam (4) are provided on the trailer or semitrailer (1),
**characterised in that**
with a closed ring beam (4) the upper flange (5) of the ring beam (4) is designed to absorb bending forces of the inner support (3) and that with an open ring beam (6) on the upper side (7) latching elements (12, 14) are arranged laterally on the inner support (3) and on the opposite sides of the ring beams (6) in order to transfer bending forces.

2. Device according to claim 1,
**characterised in that**
the ring beam (4, 6) has on its lower side (8) coupling clips (9) as fastening means, which can be fixed via bolts to coupling means (10) on the vehicle (1).

3. Device according to claim 1 or 2,
**characterised in that**
the ring beam (4, 6) is provided with at least one latching device (14) for positive engagement connection to the inner support (3).

4. Device according to one or more of claims 1 to 3,
**characterised in that**
the ring beam (4, 6) has on its outside coupling elements (13) for the coupling of supply lines to the vehicle (1).

5. Device according to one or more of claims 1 to 4,
**characterised in that**
the inner support (3) has a flexible line guide for transferring the supply lines from a lead chassis or a gooseneck to the ring beam (4, 6) .

6. Device according to one or more of claims 1 to 5,
**characterised in that**
the ring beam (4, 6) can be locked displaceably and in the desired position on the inner support (3).

## Revendications

1. Dispositif pour modifier la longueur de la surface de chargement de remorques et de semi-remorques,
dans lequel les remorques et semi-remorques sont équipées d'un support central (2) réalisé sous forme de tubes ou de goulottes (2) et d'un support interne (3) qui peut être introduit dans celui-ci et retiré de celui-ci
et dans lequel le support intérieur (3) est muni d'une armature annulaire (6) ouverte sur le dessus (7) ou d'une armature annulaire (4) fermée tout autour, avec une membrure supérieure (5), et des éléments de fixation destinés à l'armature annulaire (4) sont prévus au niveau de la remorque ou semi-remorque (1),
**caractérisé en ce que**, dans le cas d'une armature annulaire fermée (4), la membrure supérieure (5) de l'armature annulaire (4) est conçue pour absorber des forces de flexion du support intérieur (3) et **en ce que**, dans le cas d'une armature annulaire (6) ouverte sur le dessus (7), des éléments de verrouillage (12, 14) sont agencés latéralement au niveau du support intérieur (3) et des côtés opposés de l'armature annulaire (6) afin de transférer des forces de flexion.

2. Dispositif selon la revendication 1, **caractérisé en ce que** l'armature annulaire (4, 6) comporte au niveau de son dessous (8) des éclisses de couplage (9) qui servent d'éléments de fixation et qui peuvent être fixées avec des éclisses de couplage (10) au niveau du véhicule (1) par l'intermédiaire de boulons.

3. Dispositif selon la revendication 1 ou 2, **caractérisé en ce que** l'armature annulaire (4, 6) est munie d'au moins un dispositif de verrouillage (14) en vue de l'assemblage par concordance de forme avec le support intérieur (3).

4. Dispositif selon une ou plusieurs des revendications 1 à 3, **caractérisé en ce que** l'armature annulaire (4, 6) comporte au niveau de son côté extérieur des éléments de couplage (13) destinés au couplage de conducteurs d'alimentation avec le véhicule (1).

5. Dispositif selon une ou plusieurs des revendications 1 à 4, **caractérisé en ce que** le support intérieur (3) comporte un guide flexible de conducteurs afin de faire passer les conducteurs d'alimentation d'un châssis avant ou d'un col-de-cygne à l'armature annulaire (4, 6).

6. Dispositif selon une ou plusieurs des revendications 1 à 5, **caractérisé en ce que** l'armature annulaire (4, 6) peut être déplacée sur le support intérieur (3) et être bloquée dans la position souhaitée.
